# EUROPEAN PATENT APPLICATION

(11) **EP 4 661 372 A1**
(43) Date of publication of application: **10.12.2025**
(21) Application number: 23919938.3
(22) Date of filing: 11.12.2023
(51) Int. Cl.: H04L 61/5038

(54) **TERMINAL DEVICE, COMMUNICATION SYSTEM, AND COMMUNICATION ADDRESS SETTING METHOD FOR TERMINAL DEVICE**

(30) Priority: 01.02.2023 JP 2023014256
(71) Applicant: Panasonic Intellectual Property Management Co., Ltd., Kadoma-shi, Osaka 571-0057 (JP)
(72) Inventor: SAKAMOTO Mitsuhiro, Osaka 571-0057 (JP)
(74) Representative: SSM Sandmair
(86) International application number: PCT/JP2023/044147
(87) International publication number: WO 2024/161803

(57) **Abstract**

A terminal device is a terminal device communicatively connected to a management device. The terminal device includes a number-of-times setting unit that sets an acceptable number of times with respect to a reply request signal transmitted from the management device, a counter that counts down the acceptable number of times each time the reply request signal is accepted, and an address setting unit that sets a communication address transmitted from the management device as a communication address of the terminal device when the acceptable number of times is 0.

## Description

### TECHNICAL FIELD

The present disclosure relates to a terminal device of a communication system, a communication system including the terminal device, and a communication address setting method for the terminal device.

### BACKGROUND ART

Conventionally, a communication system including a plurality of terminal devices and a management device that controls the plurality of terminal devices is known. In such a communication system, by setting a communication address for each of the plurality of terminal devices, each terminal device can be individually controlled by using the management device.

PTL 1 discloses a method for setting a communication address for each terminal device. In the method disclosed in PTL 1, the management device issues a random address setting command to set a temporary address at random with respect to each terminal device. Next, the management device issues an operation request command in which a destination address is sequentially changed, checks a response from the terminal device, and checks the existing temporary address and the function of the terminal device. Thereafter, the management device issues an address change command to each terminal device having the temporary address, and changes the temporary address to a main address specified by the management device for each terminal device.

However, in the method disclosed in PTL 1, the management device needs to issue an operation request command while sequentially changing the destination address, check the response from the terminal device, and check the temporary address of the terminal device. Thus, complicated processing is required.

### Citation List

### Patent Literature

PTL 1: Unexamined Japanese Patent Publication No. 2006-295585

### SUMMARY OF THE INVENTION

In view of the above problem, the present disclosure provides a terminal device, a communication system, and a communication address setting method for the terminal device with which a communication address can be easily set.

A terminal device according to one aspect of the present disclosure is a terminal device communicatively connected to a management device, the terminal device including a number-of-times setting unit that sets an acceptable number of times with respect to a reply request signal transmitted from the management device, a counter that counts down the acceptable number of times each time the reply request signal is accepted, and an address setting unit that sets a communication address transmitted from the management device as a communication address of the terminal device when the acceptable number of times is 0.

The number-of-times setting unit may randomly set the acceptable number of times by accepting a setting start signal transmitted from the management device.

The terminal device may further include a reply unit that outputs a reply signal with respect to the reply request signal, wherein the reply unit may output the reply signal to the management device when the acceptable number of times becomes 0, and the address setting unit may acquire the communication address transmitted from the management device based on the reply signal and set the communication address.

The terminal device may further include a response time setting unit that sets a response time from acceptance of the reply request signal to output of the reply signal.

The response time setting unit may randomly set the response time by accepting a setting start signal transmitted from the management device.

The number-of-times setting unit may set again the acceptable number of times by accepting the reply request signal when the acceptable number of times is 0, and the response time setting unit may set again the response time by accepting the reply request signal when the acceptable number of times is 0.

A terminal device according to another aspect of the present disclosure is a terminal device communicatively connected to a management device, the terminal device including a number-of-times setting unit that randomly sets a predetermined number of times, a counter that counts a number of times of acceptance of a reply request signal transmitted from the management device, and an address setting unit that sets a communication address transmitted from the management device as a communication address of the terminal device when the number of times of acceptance matches the predetermined number of times.

A communication system according to another aspect of the present disclosure is a communication system including the management device and a plurality of the terminal devices, each of the plurality of terminal devices being any of the terminal devices described above, wherein the plurality of terminal devices is bus-connected to the management device.

Each of the plurality of terminal devices may include a bus communication terminal bus-connected to the management device and acquire the communication address transmitted from the management device via the bus communication terminal, and the management device may control the terminal device by outputting a control signal including information on the communication address to the bus communication terminal.

The plurality of terminal devices may include at least a first terminal device and a second terminal device, each of the first terminal device and the second terminal device may include a bus communication terminal on one side and a bus communication terminal on an other side, the management device may be connected to the bus communication terminal on the one side of the first terminal device, and the bus communication terminal on the other side of the first terminal device may be connected to the bus communication terminal on the one side of the second terminal device.

When a signal received through replies of the first terminal device and the second terminal device is different from a predetermined reply signal, the management device may discard the signal that has been received and transmit the reply request signal to the first terminal device and the second terminal device, and each of the first terminal device and the second terminal device may set again the acceptable number of times and the response time by accepting the reply request signal with the acceptable number of times being 0.

The management device may output an all-retry signal for setting again the communication address when a number of times of outputting the reply request signal has exceeded a predetermined number, and each of the plurality of terminal devices may set again the acceptable number of times and the response time based on the all-retry signal and delete the communication address when the communication address is already set for the terminal device.

A communication address setting method for a terminal device according to another aspect of the present disclosure includes randomly setting a predetermined number of times, counting a number of times of acceptance of a reply request signal transmitted from an external device, and setting a communication address transmitted from the external device as a communication address of the terminal device when the number of times of acceptance matches the predetermined number of times.

According to the terminal device, the communication system, and the communication address setting method for the terminal device of the present disclosure, a communication address can be easily set.

### BRIEF DESCRIPTION OF THE DRAWINGS

Fig. 1 is a diagram illustrating a schematic configuration of a communication system according to an exemplary embodiment.
Fig. 2 is a diagram illustrating a circuit configuration of a terminal device included in the communication system.
Fig. 3 is a sequence diagram illustrating an example of a first operation of the communication system.
Fig. 4 is a sequence diagram illustrating an example of a second operation of the communication system.
Fig. 5 is a diagram illustrating an example of a signal received by a management device in the second operation.
Fig. 6 is a sequence diagram illustrating an example of a third operation of the communication system.
Fig. 7 is a flowchart illustrating an operation of the management device.
Fig. 8 is a flowchart illustrating a communication address setting method for the terminal device.
Fig. 9 is a flowchart illustrating an operation of a management device of a modification.
Fig. 10 is a flowchart illustrating a communication address setting method for the terminal device of the modification.

### DESCRIPTION OF EMBODIMENT

Hereinafter, an exemplary embodiment will be specifically described with reference to the drawings. The exemplary embodiment described below illustrates a specific example of the present disclosure. Numerical values, shapes, materials, constituent elements, arrangement positions and connection modes of the constituent elements, steps, order of the steps, and the like illustrated in the following exemplary embodiment are merely examples, and therefore are not intended to limit the present disclosure. Among the constituent elements in the following exemplary embodiment, the constituent elements that are not described in the independent claims representing an implementation according to a mode of the present disclosure are described as optional constituent elements. Implementations of the present disclosure are not limited to the current independent claims, but may also be expressed by other independent claims.

Each of the drawings is a schematic view and is not necessarily exactly illustrated. In each of the drawings, substantially the same components as those in other drawings are denoted by the same reference numerals, and redundant description may be omitted or simplified.

### (Exemplary embodiment)

### [Configurations of communication system and terminal device]

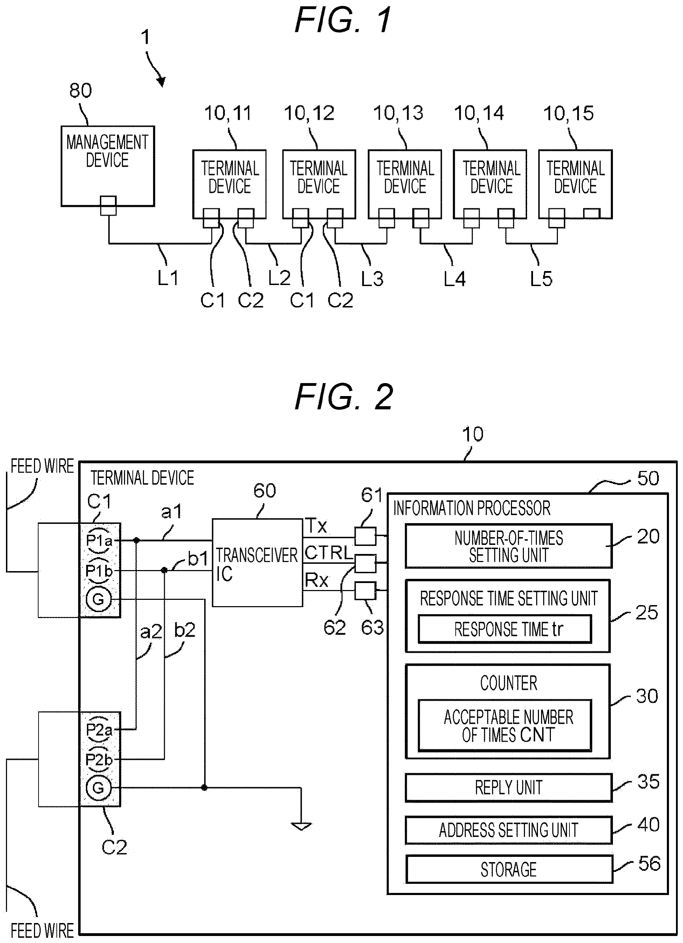

Configurations of a communication system according to an exemplary embodiment and a terminal device included in the communication system will be described with reference to Figs. 1 and 2.

Fig. 1 is a diagram illustrating a schematic configuration of communication system 1 according to the exemplary embodiment.

As illustrated in Fig. 1, communication system 1 includes management device 80 and a plurality of terminal devices 11, 12, 13, 14, and 15. In Fig. 1, illustration of a power supply line for supplying power to management device 80 and to each of the plurality of terminal devices 11 to 15 is omitted.

Management device 80 is a device that controls the plurality of terminal devices 11 to 15. Management device 80 is, for example, a master controller. Each of the plurality of terminal devices 11 to 15 is a device that operates based on a control signal or the like output from management device 80. Each of the plurality of terminal devices 11 to 15 is, for example, a drive device such as a motor, or an electric device such as an air conditioning device, a lighting device, an imaging device, a display device, or a communication device.

Management device 80 and the plurality of terminal devices 11 to 15 are daisy-chained by a plurality of feed wires L1 to L5. Feed wires L1 to L5 are, for example, cables with connectors having a plurality of communication lines. In this example, management device 80 and terminal device 11 are connected by feed wire L1. Terminal device 11 and terminal device 12 are connected by feed wire L2. Terminal device 12 and terminal device 13 are connected by feed wire L3. Terminal device 13 and terminal device 14 are connected by feed wire L4. Terminal device 14 and terminal device 15 are connected by feed wire L5. In this manner, in communication system 1, terminal devices 11, 12, 13, 14, and 15 are connected in this order downstream from management device 80 in the communication path starting from management device 80.

In the present exemplary embodiment, the communication address of each of the plurality of terminal devices 11 to 15 is set by using management device 80, terminal devices 11 to 15, and feed wires L1 to L5. Hereinafter, some or all of the plurality of terminal devices 11 to 15 may be referred to as terminal device 10. The communication address is an address for communication allocated from management device 80, which is an external device, to each terminal device 10. Management device 80 transmits various commands to terminal device 10 to set a communication address for terminal device 10. Various commands output from management device 80 to set the communication address are simultaneously transmitted to each terminal device 10 by, for example, a broadcast method.

The number of the plurality of terminal devices 10 is not limited to five, and may be from two to four, inclusive, or more than or equal to six. The connection order of the plurality of terminal devices 11 to 15 may be determined in advance.

Fig. 2 is a diagram illustrating a circuit configuration of terminal device 10 included in communication system 1.

As illustrated in Fig. 2, terminal device 10 includes connectors C1 and C2 connected to the feed wires, information processor 50 for setting the communication address, and transceiver integrated circuit (transceiver IC) 60.

Information processor 50 is, for example, a microprocessor. Information processor 50 controls the device body of terminal device 10 and transceiver IC 60. Information processor 50 sets the communication address of terminal device 10 based on various commands transmitted from management device 80.

Transceiver IC 60 is an integrated circuit (IC) for performing communication between management device 80 and terminal device 10. Transceiver IC 60 performs bus communication based on a communication standard such as RS485, for example. Transceiver IC 60 receives the commands output from management device 80 and outputs the commands to information processor 50 through photocoupler 63. Transceiver IC 60 accepts the signal output from information processor 50 through photocoupler 61 and transmits the signal to management device 80. Transmission and reception by transceiver IC 60 are switched by a high signal and a low signal input to transceiver IC 60 via photocoupler 62. When the signal output from management device 80 is maintained in a receivable state, a low signal is input to transceiver IC 60. When the signal output from information processor 50 is transmitted, a high signal is input to transceiver IC 60.

Each of connectors C1 and C2 is, for example, a receptacle connector. Connectors C1 and C2 are fixed to the device body of terminal device 10. Connector C1 and connector C2 have the same terminal arrangement. Connector C1 includes bus communication terminals P1a and P1b on one side and ground terminal G. Connector C2 includes bus communication terminals P2a and P2b on the other side and ground terminal G. Ground terminal G is a terminal connected to a ground line in feed wires L1 to L5. Ground terminal G is set to have a ground potential.

Bus communication terminals P1a, P1b, P2a, and P2b are terminals used when terminal device 10 performs bus communication with management device 80. For example, bus communication terminal P1a of connector C1 is connected to transceiver IC 60 via internal wire a1 electrically connected to bus communication terminal P1a. Bus communication terminal P1a of connector C1 is also connected to bus communication terminal P2a of connector C2 via internal wire a2 electrically connected to bus communication terminal P1a. Bus communication terminal P1b of connector C1 is connected to transceiver IC 60 via internal wire b1 electrically connected to bus communication terminal P1b. Bus communication terminal P1b of connector C1 is also connected to bus communication terminal P2b of connector C2 via internal wire b2 electrically connected to bus communication terminal P1b.

The commands output from management device 80 are transmitted to information processor 50 via the feed wires, bus communication terminals P1a and P1b, internal wires a1 and b1, and transceiver IC 60. The commands are also transmitted to bus communication terminals P2a and P2b via the feed wires, bus communication terminals P1a and P1b, and internal wires a2 and b2. In this manner, in communication system 1, bus communication terminals P1a and P2a are connected by internal wire a2 of terminal device 10, and bus communication terminals P1b and P2b are connected by internal wire b2, whereby terminal device 10 is bus-connected to management device 80.

Terminal device 10 is not provided with a dedicated terminal for address setting. Terminal device 10 sets the communication address of terminal device 10 via bus communication terminals P1a, P1b, P2a, and P2b. That is, information processor 50 acquires various commands transmitted from management device 80 via the bus communication terminals, and sets the communication address of terminal device 10.

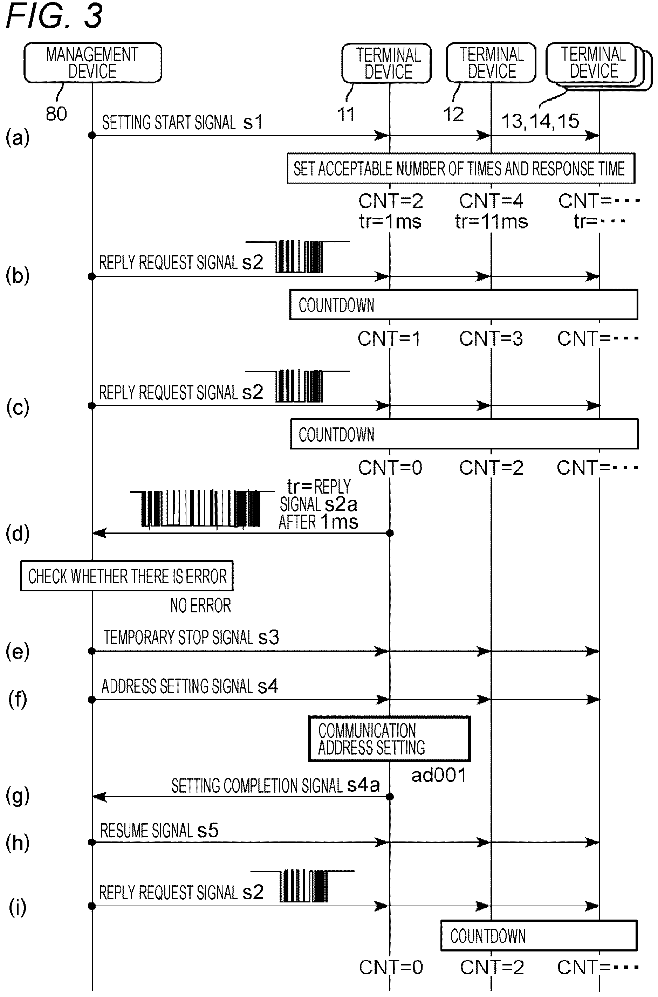

Here, each configuration of information processor 50 required for setting the communication address will be described. Information processor 50 includes number-of-times setting unit 20, response time setting unit 25, counter 30, reply unit 35, address setting unit 40, and storage 56. Acceptable number of times CNT, setting start signal s1, reply request signal s2, reply signal s2a, response time tr, and setting completion signal s4a in the following description will be described later again with reference to Figs. 3 to 6.

Number-of-times setting unit 20 randomly sets acceptable number of times CNT by accepting setting start signal s1 for starting the setting of the communication address. Setting start signal s1 is a signal first transmitted from management device 80. Acceptable number of times CNT is the number of times reply request signal s2 transmitted from management device 80 can be accepted. Reply request signal s2 is a signal requesting a reply from terminal device 10 with respect to the signal output from management device 80. For example, number-of-times setting unit 20 randomly generates one integer from a range of from 1 to 254, inclusive, using a random number generator, and initially sets the generated integer as acceptable number of times CNT. Information on the initially set acceptable number of times CNT is output to counter 30.

Response time setting unit 25 randomly sets response time tr by accepting setting start signal s1. Response time tr is the time from a time (reference time) at which reply request signal s2 transmitted from management device 80 is accepted until reply signal s2a is output. For example, response time setting unit 25 randomly generates one integer from a range of from 1 to 254, inclusive, using a random number generator, and sets the generated integer as response time tr in units of ms (in units of 1/1000 seconds).

Counter 30 counts down acceptable number of times CNT each time reply request signal s2 transmitted from management device 80 is accepted. Acceptable number of times CNT is subtracted by one each time counter 30 counts one.

When remaining acceptable number of times CNT becomes 0 through the countdown of counter 30, reply unit 35 outputs reply signal s2a corresponding to reply request signal s2 to management device 80. Reply signal s2a output from each terminal device 10 is a digital signal including the same binary data.

Address setting unit 40 acquires the communication address transmitted from management device 80 based on reply signal s2a, and sets the communication address as the communication address of terminal device 10. Address setting unit 40 can set the communication address only when acceptable number of times CNT is 0. Address setting unit 40 of terminal device 10 for which the communication address is set outputs setting completion signal s4a indicating that the setting of the communication address has been completed to management device 80.

The communication address set by address setting unit 40 is stored in storage 56. Storage 56 stores the information on acceptable number of times CNT each time the acceptable number of times is counted down. The information on acceptable number of times CNT described above can be read from response time setting unit 25, reply unit 35, address setting unit 40, and the like. That is, the information on acceptable number of times CNT is shared by the constituent elements in information processor 50.

Terminal device 10 includes number-of-times setting unit 20, counter 30, and address setting unit 40 in this manner. Number-of-times setting unit 20 sets acceptable number of times CNT with respect to reply request signal s2 transmitted from management device 80. Counter 30 counts down acceptable number of times CNT each time reply request signal s2 is accepted. When acceptable number of times CNT is 0, address setting unit 40 sets the communication address transmitted from management device 80 as the communication address of terminal device 10. Since terminal device 10 has the above configuration, the communication address can be easily set.

A first operation, a second operation, and a third operation of communication system 1 having the above configuration will be specifically described.

### [First operation of communication system]

Fig. 3 is a sequence diagram illustrating an example of the first operation of communication system 1.

Hereinafter, operations of first terminal device 11 and second terminal device 12 among terminal devices 11 to 15 will be mainly described.

As illustrated in part (a) of Fig. 3, management device 80 simultaneously transmits setting start signal s1 for starting the setting of the communication address of terminal devices 11 to 15 to terminal devices 11 to 15. In the MODBUS communication adopted in the present exemplary embodiment, simultaneous transmission by the broadcast method is realized by setting the address included in the command to 0.

Terminal devices 11 to 15 randomly set each of acceptable number of times CNT and response time tr by accepting setting start signal s1. In Fig. 3, acceptable number of times CNT of terminal device 11 is set to 2, and response time tr is set to 1 ms. Acceptable number of times CNT of terminal device 12 is set to 4, and response time tr is set to 11 ms. Acceptable number of times CNT of terminal devices 13 to 15 is set to be larger than acceptable number of times CNT of terminal devices 11 and 12.

As illustrated in part (b) of Fig. 3, after transmitting setting start signal s1, management device 80 simultaneously transmits reply request signal s2 to terminal devices 11 to 15.

Each of terminal devices 11 to 15 accepts reply request signal s2 and counts down the acceptable number of times CNT by one. As a result, remaining acceptable number of times CNT of terminal device 11 becomes 1, and remaining acceptable number of times CNT of terminal device 12 becomes 3. At this time, since acceptable number of times CNT of terminal devices 11 and 12 is not 0, reply to management device 80 is not performed.

When there is no reply from terminal devices 11 to 15 after a lapse of a certain period of time from the transmission of reply request signal s2, management device 80 further simultaneously transmits reply request signal s2 to terminal devices 11 to 15 as illustrated in (c) of Fig. 3. The certain period of time is, for example, 300 ms. Reply request signal s2 repeatedly output from management device 80 is the same digital signal every time. Reply request signal s2 does not include information on a communication address necessary for performing bidirectional communication.

Each of terminal devices 11 to 15 accepts reply request signal s2 and counts down the acceptable number of times CNT by one. As a result, remaining acceptable number of times CNT of terminal device 11 becomes 0, and remaining acceptable number of times CNT of terminal device 12 becomes 2.

At this time, since acceptable number of times CNT is 0, terminal device 11 outputs reply signal s2a to management device 80 after response time tr (= 1 ms) has elapsed as illustrated in part (d) of Fig. 3. On the other hand, since acceptable number of times CNT is not 0, the terminal device 12 does not output reply signal s2a. Other terminal devices 12 to 15 do not accept reply signal s2a output from terminal device 11, or the devices ignore the reply signal.

Upon receiving reply signal s2a, management device 80 checks whether there is an error in reply signal s2a. For example, management device 80 checks whether there is an error depending on whether reply signal s2a is different from a predetermined reply signal. Specifically, management device 80 performs error detection on reply signal s2a through cyclic redundancy checking (CRC). Management device 80 may check whether there is an error based on whether the number of bytes of reply signal s2a is the same as a predetermined number of bytes.

When there is no error in reply signal s2a, management device 80 simultaneously transmits temporary stop signal s3 for stopping the countdown of acceptable number of times CNT to terminal devices 11 to 15 as illustrated in part (e) of Fig. 3.

Upon accepting temporary stop signal s3 transmitted from management device 80, terminal devices 11 to 15 temporarily stop the countdown of acceptable number of times CNT. In this state, even when terminal devices 11 to 15 receive a signal such as reply request signal s2, the terminal devices do not perform the countdown of acceptable number of times CNT.

As illustrated in part (f) of Fig. 3, when a predetermined time elapses after temporary stop signal s3 is transmitted, management device 80 simultaneously transmits address setting signal s4 to terminal devices 11 to 15. Address setting signal s4 includes information on a communication address to be set for the terminal device (terminal device 11 in this example).

Since acceptable number of times CNT is 0, terminal device 11 acquires the communication address transmitted from management device 80 and sets the communication address as its own communication address. As illustrated in part (g) of Fig. 3, after setting the communication address, terminal device 11 outputs setting completion signal s4a indicating that the setting of the communication address has been completed to management device 80. In terminal devices 12 to 15, acceptable number of times CNT is not 0. Thus, terminal devices 12 to 15 ignore the communication address transmitted from management device 80 and do not set the communication address. Terminal devices 12 to 15 do not accept setting completion signal s4a output from terminal device 11 which is different from their own device, or the devices ignore the signal.

As illustrated in part (h) of Fig. 3, upon accepting setting completion signal s4a transmitted from terminal device 11, management device 80 simultaneously transmits resume signal s5, which is a signal for resuming each piece of processing for setting the communication address, to terminal devices 11 to 15.

By accepting resume signal s5, terminal devices 11 to 15 can accept the subsequent commands transmitted from management device 80. Since the communication address has already been set to terminal device 11, terminal device 11 ignores the subsequent commands transmitted from management device 80. By accepting resume signal s5, terminal devices 12 to 15 perform each piece of processing for the subsequent commands transmitted from management device 80.

As illustrated in part (i) of Fig. 3, after transmitting resume signal s5, management device 80 simultaneously transmits reply request signal s2 to each of terminal devices 11 to 15. Each time each of terminal devices 12 to 15 accepts reply request signal s2, the terminal device counts down acceptable number of times CNT.

Hereinafter, in the same manner as in terminal device 11, terminal devices 12 to 15 transmit and receive various commands to and from management device 80, and set a communication address. The information on the communication address accepted by each of terminal devices 11 to 15 is different for each address setting signal s4 sequentially output from management device 80. Communication addresses different from each other are set for terminal devices 11 to 15.

### [Second operation of communication system]

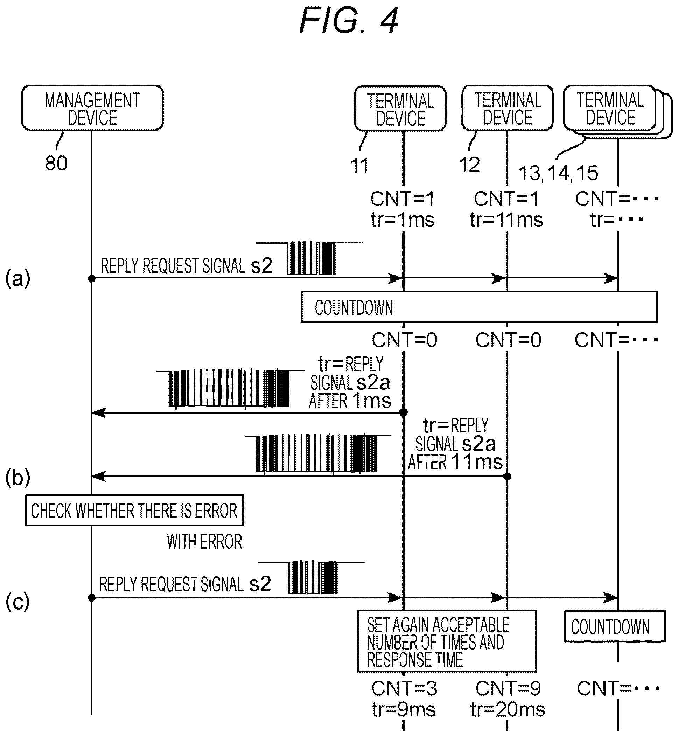

Fig. 4 is a sequence diagram illustrating an example of a second operation of communication system 1.

In the second operation, a case is described where the same number of times is set as acceptable number of times CNT, and different response times tr are set for terminal devices 11 and 12. Acceptable number of times CNT of terminal devices 13 to 15 is set to be larger than acceptable number of times CNT of terminal devices 11 and 12. In this example, description will be started from a state in which remaining acceptable number of times CNT of terminal devices 11 and 12 is 1.

As illustrated in part (a) of Fig. 4, management device 80 simultaneously transmits reply request signal s2 to terminal devices 11 to 15. Since there is almost no difference in the time at which terminal devices 11 to 15 accept reply request signal s2, it can be regarded as the same time.

Each of terminal devices 11 to 15 accepts reply request signal s2 and counts down the acceptable number of times CNT by one. As a result, remaining acceptable number of times CNT of terminal device 11 becomes 0, and remaining acceptable number of times CNT of terminal device 12 becomes 0.

As illustrated in part (b) of Fig. 4, each of terminal devices 11 and 12 outputs reply signal s2a to management device 80 because acceptable number of times CNT is 0. For example, terminal device 11 outputs reply signal s2a after a response time of 1 ms has elapsed since the acceptance of reply request signal s2. Terminal device 12 outputs reply signal s2a after a response time of 11 ms has elapsed since the acceptance of reply request signal s2.

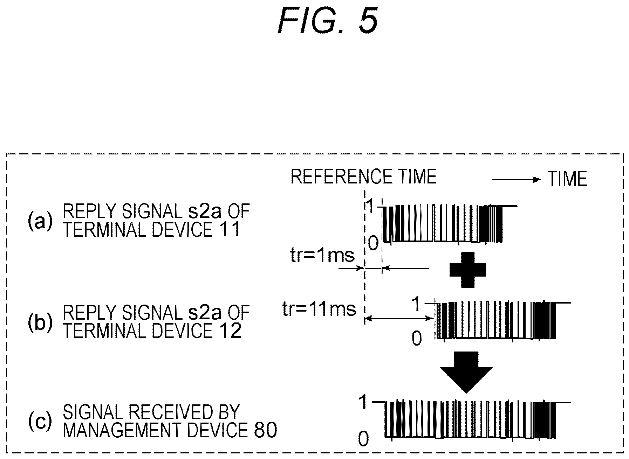

Fig. 5 is a diagram illustrating an example of a signal received by management device 80 in the second operation.

Reply signals s2a output from terminal devices 11 and 12 are the same digital signals, but have different response times. Thus, reply signal s2a arrives at management device 80 at different times. For this reason, the signal received by management device 80 is a combined signal (see part (c) of Fig. 5) in a state where reply signal s2a (see part (a) of Fig. 5) of terminal device 11 and reply signal s2a (see part (b) of Fig. 5) of terminal device 12 are shifted in a time axis direction.

Management device 80 checks the presence or absence of an error depending on whether the received signal is different from a predetermined reply signal. In this example, the received signal is different from a predetermined reply signal. Thus, management device 80 determines that there is an error in the received signal, and discards the received signal. Since the received signal is discarded, the reply signals output from terminal devices 11 and 12 are substantially absent. Thus, as illustrated in part (c) of Fig. 4, management device 80 simultaneously transmits reply request signal s2 to terminal devices 11 to 15 again.

When accepting reply request signal s2 instead of temporary stop signal s3 (or address setting signal s4) that should originally be accepted, terminal devices 11 and 12 set again each of acceptable number of times CNT and response time tr. That is, when accepting reply request signal s2 in a state where acceptable number of times CNT is 0, terminal devices 11 and 12 randomly set each of acceptable number of times CNT and response time tr again. In this example, acceptable number of times CNT of terminal device 11 is set to 3, and response time tr is set to 9 ms. Acceptable number of times CNT of terminal device 12 is set to 9, and response time tr is set to 20 ms.

On the other hand, terminal devices 13 to 15 accept reply request signal s2 as usual. Terminal devices 13 to 15 continue to count down acceptable number of times CNT. Hereinafter, in the same manner as in the first operation, terminal devices 11 to 15 transmit and receive various commands to and from management device 80, and set a communication address.

### [Third operation of communication system]

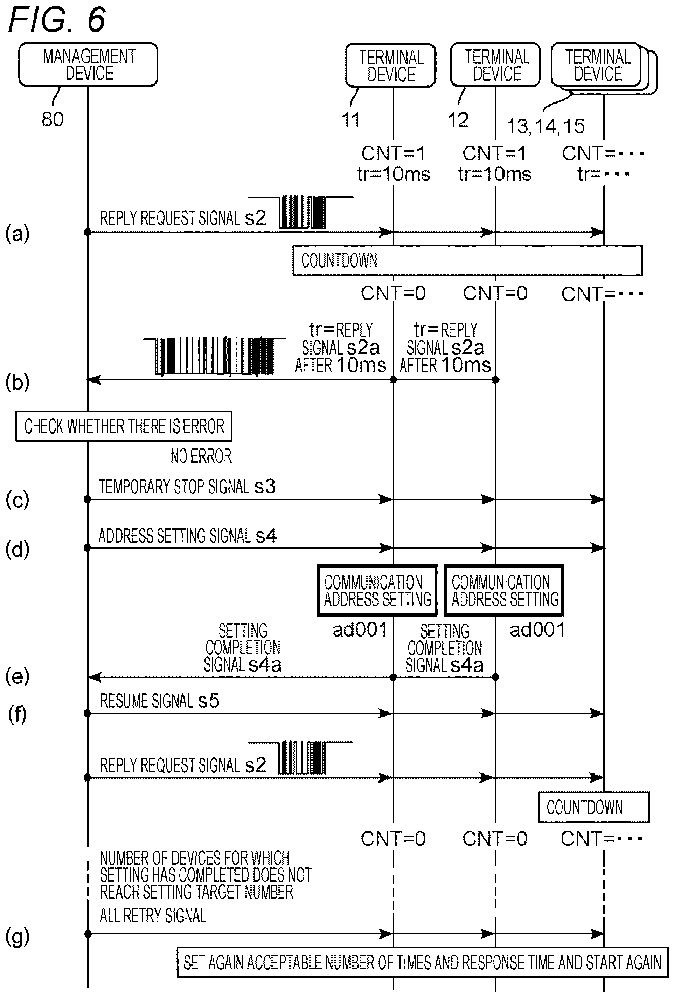

Fig. 6 is a sequence diagram illustrating an example of a third operation of communication system 1.

In the third operation, a case is described where the same number of times is set as acceptable number of times CNT for terminal devices 11 and 12, and the same response time tr is set for terminal devices 11 and 12. Acceptable number of times CNT of terminal devices 13 to 15 is set to be larger than acceptable number of times CNT of terminal devices 11 and 12. In this example, description will be started from a state in which remaining acceptable number of times CNT of terminal devices 11 and 12 is 1.

As illustrated in part (a) of Fig. 6, management device 80 simultaneously transmits reply request signal s2 to terminal devices 11 to 15.

Each of terminal devices 11 to 15 accepts reply request signal s2 and counts down the acceptable number of times CNT by one. As a result, remaining acceptable number of times CNT of terminal device 11 becomes 0, and remaining acceptable number of times CNT of terminal device 12 becomes 0.

As illustrated in part (b) of Fig. 6, since acceptable number of times CNT is 0, each of terminal devices 11 and 12 outputs reply signal s2a to management device 80. For example, each of terminal device 11 and terminal device 12 outputs reply signal s2a after a response time of 10 ms has elapsed since the acceptance of reply request signal s2.

Reply signals s2a output from terminal devices 11 and 12 are the same digital signals and have the same response time. Thus, reply signals s2a arrive at management device 80 at the same time. Therefore, the signal received by management device 80 is the same signal as reply signal s2a of each of terminal devices 11 and 12.

Management device 80 checks the presence or absence of an error depending on whether the received signal is different from a predetermined reply signal. In this example, the received signal is the same as predetermined reply signal s2a. Thus, management device 80 determines that there is no error in the received signal and simultaneously transmits temporary stop signal s3 for stopping the countdown of acceptable number of times CNT to terminal devices 11 to 15 as illustrated in part (c) of Fig. 6.

Upon accepting temporary stop signal s3 transmitted from management device 80, terminal devices 11 to 15 temporarily stop the countdown of acceptable number of times CNT.

As illustrated in part (d) of Fig. 6, when a predetermined time elapses after temporary stop signal s3 is transmitted, management device 80 simultaneously transmits address setting signal s4 to terminal devices 11 to 15.

Since acceptable number of times CNT is 0, each of terminal devices 11 and 12 acquires the communication address transmitted from management device 80 and sets the communication address as its own communication address. As illustrated in part (e) of Fig. 6, after setting the communication address, each of terminal devices 11 and 12 outputs setting completion signal s4a indicating that the setting of the communication address has been completed to management device 80. In the third operation, the same communication address is once set to terminal devices 11 and 12.

Upon accepting setting completion signal s4a transmitted from terminal devices 11 and 12, management device 80 simultaneously transmits resume signal s5 to terminal devices 11 to 15 as illustrated in part (f) of Fig. 6.

Since the communication address has already been set, terminal devices 11 and 12 ignore the subsequent commands transmitted from management device 80. By accepting resume signal s5, terminal devices 13 to 15 perform each piece of processing for the subsequent commands transmitted from management device 80.

Hereinafter, in the same manner as in the first operation, terminal devices 13 to 15 transmit and receive various commands to and from management device 80, and set a communication address.

However, since the same communication address is set to terminal devices 11 and 12, even though reply request signal s2 is transmitted from management device 80 many times, the number of times setting completion signal s4a is accepted, that is, the number of devices for which the setting has completed does not reach the setting target number of terminal devices 11 to 15. Thus, in the third operation, as illustrated in part (g) of Fig. 6, management device 80 outputs an all-retry signal for setting again the communication address when the number of times of non-replies with respect to reply request signal s2 exceeds a specified number of times. The all-retry signal may be a signal similar to setting start signal s1 described above.

Each of terminal devices 11 to 15 sets again acceptable number of times CNT and response time tr based on the all-retry signal transmitted from management device 80, and performs the processing for setting the address again from the beginning. When the communication address is already set in each of terminal devices 11 to 15, each terminal device deletes the communication address and executes processing for setting the communication address again. Hereinafter, in the same manner as in the first operation, terminal devices 11 to 15 transmit and receive various commands to and from management device 80, and set a communication address.

In communication system 1, the communication address can be easily set to terminal device 10 through the first operation. The communication address can be reliably set in terminal device 10 through the second operation or the third operation.

In the above description, an example in which terminal device 10 counts down acceptable number of times CNT has been described. However, the terminal device is not limited to this example. Terminal device 10 may be configured to count up the number of times of acceptance.

For example, terminal device 10 may include number-of-times setting unit 20 that randomly sets a predetermined number of times, counter 30 that counts the number of times of acceptance of reply request signal s2 transmitted from management device 80, and address setting unit 40 that sets the communication address transmitted from management device 80 as the communication address of terminal device 10 when the number of times of acceptance matches a predetermined number of times.

Number-of-times setting unit 20 may randomly set the number of times of acceptance by accepting setting start signal s1. Reply unit 35 may output reply signal s2a to management device 80 when the number of times of acceptance matches a predetermined number of times. Number-of-times setting unit 20 may set again the number of times of acceptance by accepting reply request signal s2 when the number of times of acceptance matches a predetermined number of times. Response time setting unit 25 may set again response time tr by accepting reply request signal s2 when the number of times of acceptance matches a predetermined number of times.

### [Flow of operation of management device for setting communication address for terminal device]

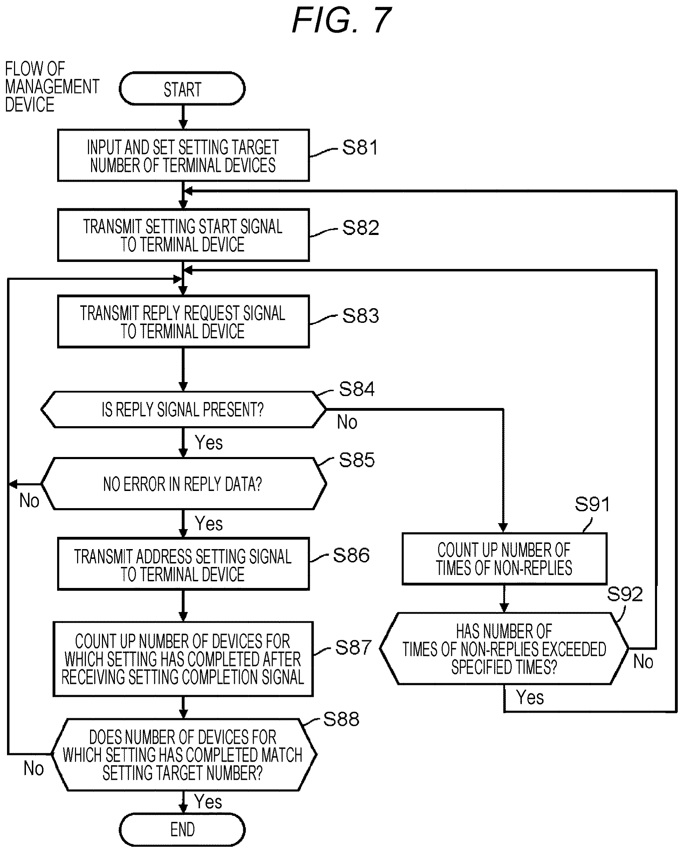

A flow of operation of management device 80 for setting a communication address for terminal device 10 will be described with reference to Fig. 7. Since the processing related to temporary stop signal s3 and resume signal s5 described above is not essential, the processing related to temporary stop signal s3 and resume signal s5 will be omitted here.

Fig. 7 is a flowchart illustrating an operation of management device 80. S and the numbers next to S in the drawing indicate step numbers.

Information on the setting target number of terminal devices 10 is input and set to management device 80 (step S81). The information on the setting target number of terminal devices 10 is input and set to management device 80 with a user interface included in management device 80, for example.

Management device 80 simultaneously transmits setting start signal s1 for starting the setting of the communication address to terminal device 10 (step S82). After a lapse of a predetermined time from the transmission of setting start signal s1, management device 80 simultaneously transmits reply request signal s2 to terminal devices 10 (step S83).

Next, management device 80 determines whether reply signal s2a of terminal device 10 with respect to reply request signal s2 is present (step S84).

When reply signal s2a is not present (No in step S84), management device 80 counts up the number of times of non-replies with respect to reply request signal s2 (step S91). The initial value of the number of times of non-replies is 0, and the number of times of non-replies is incremented by one each time the count up is performed.

Management device 80 determines whether the number of times of non-replies with respect to reply request signal s2 has exceeded a specified number of times (step S92). The specified number of times is set to a maximum value of acceptable number of times CNT that can be set by number-of-times setting unit 20. For example, when acceptable number of times CNT is set from the range of from 1 to 254, inclusive, the specified number of times is set to 254.

When the number of times of non-replies with respect to reply request signal s2 has not exceeded the specified number of times (No in step S92), the processing returns to step S83, and management device 80 simultaneously transmits reply request signal s2 to terminal device 10. As a result, terminal device 10 that has accepted reply request signal s2 continues to count down acceptable number of times CNT.

When the number of times of non-replies with respect to reply request signal s2 has exceeded the specified number of times (Yes in step S92), it is presumed that there is a plurality of terminal devices 10 for which the same acceptable number of times CNT and the same response time tr are set. Thus, management device 80 outputs the all-retry signal. In this case, terminal device 10 sets again acceptable number of times CNT and response time tr based on the all-retry signal. When the communication address is already set in terminal device 10, the terminal device deletes the communication address and executes a step for setting the communication address again.

When reply signal s2a is present in step S84 (Yes in step S84), management device 80 determines whether there is an error in reply signal s2a (step S85).

When there is an error in reply signal s2a (No in step S85), it is presumed that there is a plurality of terminal devices 10 set to the same number of acceptable number of times CNT and different response times tr. Thus, the processing returns to step S83, and reply request signal s2 is simultaneously transmitted to terminal device 10. As a result, in the plurality of terminal devices 10 that have transmitted reply signal s2a, acceptable number of times CNT and response time tr are set again. Thereafter, each step for setting the address is executed based on this flow.

On the other hand, when there is no error in reply signal s2a (Yes in step S85), management device 80 simultaneously transmits address setting signal s4 to terminal device 10 (step S86). The terminal device in which the communication address is set by address setting signal s4 outputs setting completion signal s4a.

Upon receiving setting completion signal s4a transmitted from terminal device 10, management device 80 counts up the number of devices for which the setting has completed (step S87). The initial value of the number of devices for which the setting has completed is 0, and the number of devices for which the setting has completed increases by one each time the count up is performed.

Management device 80 determines whether the number of devices for which the setting has completed matches the setting target number (step S88).

When the number of devices for which the setting has completed is less than the setting target number (No in step S88), there is another terminal device for which no communication address is set. Thus, processing for setting a communication address for another terminal device is executed. Specifically, the processing returns to step S83, and management device 80 simultaneously transmits reply request signal s2 to terminal device 10.

On the other hand, when the number of devices for which the setting has completed matches the setting target number (Yes in step S88), the communication addresses are set to all terminal devices 10. Thus, the setting of the communication address by management device 80 ends.

### [Communication address setting method for terminal device]

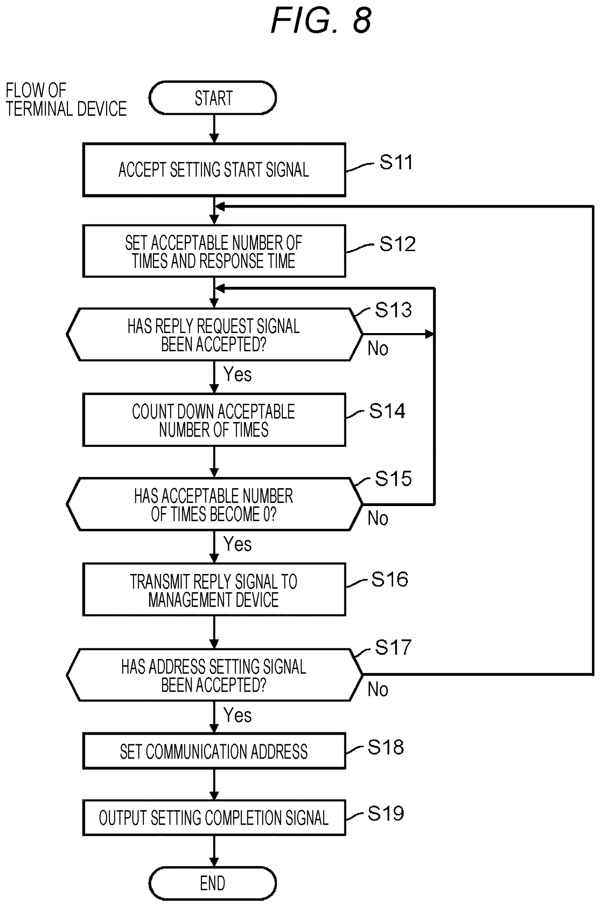

A communication address setting method for terminal device 10 will be described with reference to Fig. 8.

Fig. 8 is a flowchart illustrating a communication address setting method for terminal device 10. Fig. 8 illustrates a flowchart focusing on one terminal device 10.

Terminal device 10 accepts setting start signal s1 transmitted from management device 80 (step S11).

Terminal device 10 that has accepted setting start signal s1 randomly sets each of acceptable number of times CNT and response time tr (step S12).

Terminal device 10 determines whether reply request signal s2 transmitted from management device 80 has been accepted (step S13).

When terminal device 10 has not accepted reply request signal s2 (No in step S13), the terminal device returns to step S13 and enters an acceptance standby state for accepting reply request signal s2.

When reply request signal s2 has been accepted (Yes in step S13), terminal device 10 counts down acceptable number of times CNT (step S14). Acceptable number of times CNT decreases by one each time the countdown is performed. Terminal device 10 is configured to ignore other signals (for example, address setting signal s4) different from reply request signal s2 when acceptable number of times CNT is not 0.

Terminal device 10 determines whether its own acceptable number of times CNT is 0 (step S15).

When acceptable number of times CNT is not 0 (No in step S15), the processing returns to step S13, and terminal device 10 enters an acceptance standby state for accepting next reply request signal s2.

On the other hand, when acceptable number of times CNT is 0 (Yes in step S15), terminal device 10 transmits reply signal s2a to management device 80 (step S16). Management device 80 transmits address setting signal s4 including information on the communication address to terminal device 10 based on reply signal s2a.

Terminal device 10 determines whether address setting signal s4 has been accepted (step S17). When accepting reply request signal s2 which is a signal different from address setting signal s4, terminal device 10 determines that address setting signal s4 has not been accepted.

When address setting signal s4 has not been accepted (No in step S17), it is presumed that there is another terminal device for which the same acceptable number of times CNT is set. Thus, the processing returns to step S12, and terminal device 10 sets again each of acceptable number of times CNT and response time tr. Thereafter, each step for setting the address is executed based on this flow.

On the other hand, when accepting address setting signal s4 (Yes in step S17), terminal device 10 sets the communication address included in address setting signal s4 as its own communication address (step S18). After setting the communication address, terminal device 10 outputs setting completion signal s4a indicating that the setting of the communication address has been completed to management device 80 (step S19). By executing these steps, the communication address is set for terminal device 10.

### (Modification)

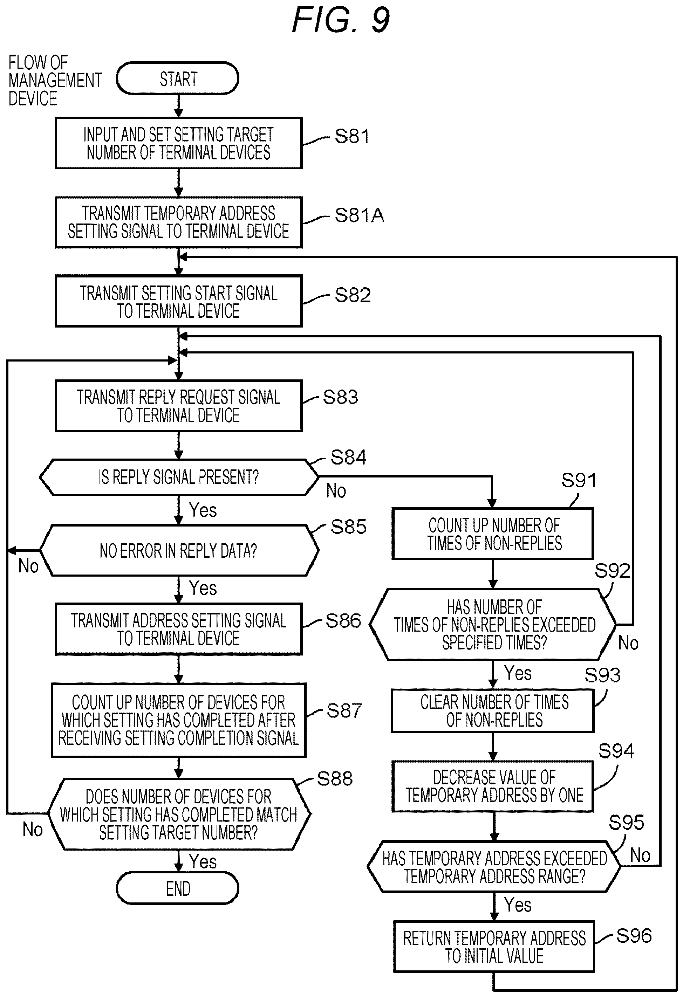

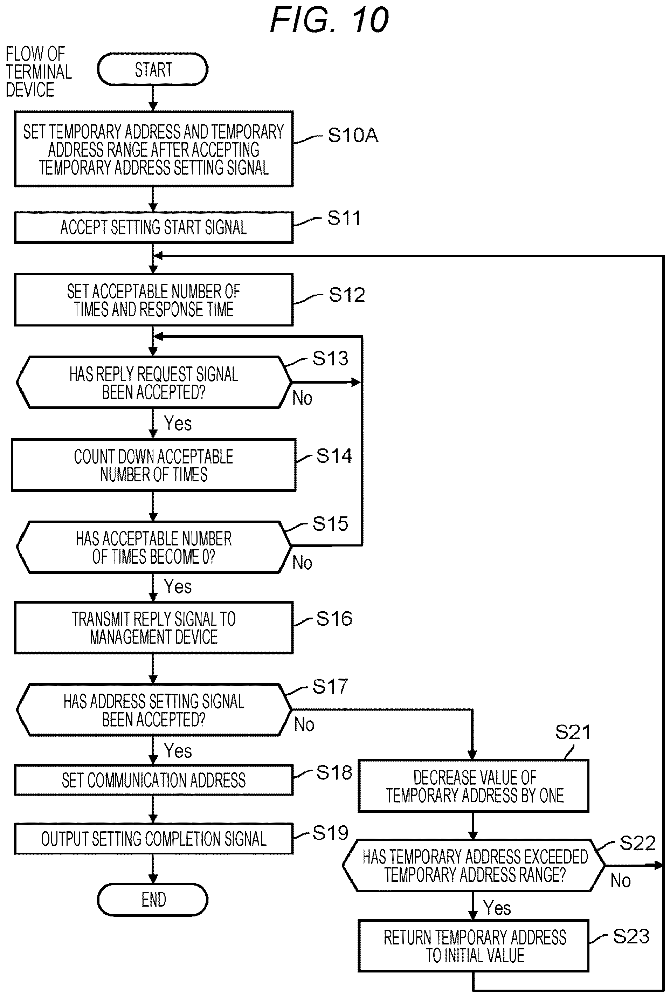

A communication address setting method according to a modification will be described with reference to Figs. 9 and 10. In the modification, a method for preventing the number of times of non-replies with respect to reply request signal s2 from becoming excessively large will be described.

### [Flow of operation of management device for setting communication address for terminal device]

Fig. 9 is a flowchart illustrating an operation of management device 80 according to a modification.

Information on the setting target number of terminal devices 10 is input and set to management device 80 (step S81).

Management device 80 simultaneously transmits temporary address setting signals for causing terminal devices 10 to set a temporary addresses to terminal devices 10 (step S81A). For example, management device 80 uniformly instructs all terminal devices 10 to set a temporary address range that is a predetermined temporary address range to 200 to 254 and set an initial value of the temporary address to 254.

Management device 80 transmits setting start signal s1 for starting the setting of the communication address to terminal device 10 (step S82). Management device 80 communicates with terminal device 10 using the temporary address designated in step S81A until the communication address (main address) is set for terminal device 10.

After a lapse of a predetermined time from the transmission of setting start signal s1, management device 80 simultaneously transmits reply request signal s2 to terminal devices 10 (step S83). Management device 80 determines whether reply signal s2a of terminal device 10 with respect to reply request signal s2 is present (step S84).

Steps S84 to S91 are the same as those in the exemplary embodiment. Thus, a part of the description will be omitted. When reply signal s2a is not present (No in step S84), management device 80 counts up the number of times of non-replies with respect to reply request signal s2 (step S91). Management device 80 determines whether the number of times of non-replies with respect to reply request signal s2 has exceeded a specified number of times (step S92).

In the modification, when the number of times of non-replies with respect to reply request signal s2 has exceeded a specified number of times (Yes in step S92), management device 80 clears the number of times of non-replies (step S93). Management device 80 decreases the value of the temporary address set in step S81A by one (step S94). For example, when the original temporary address is 254, management device 80 sets the temporary address after the change to 253.

Management device 80 determines whether the temporary address set for terminal device 10 has exceeded the temporary address range set in step S81A (step S95). For example, when the temporary address range is set to 200 to 254, it is determined that the temporary address has exceeded to the minus side when the temporary address is less than 200.

When the temporary address has not exceeded the temporary address range set in step S81A (No in step S95), the processing returns to step S83, and management device 80 transmits reply request signal s2 to terminal device 10. Management device 80 communicates with terminal device 10 using the temporary address reduced in step S94 until the communication address is set for terminal device 10. In this case, management device 80 communicates with terminal device 10 using 253, that is, the temporary address after the change.

When the temporary address has exceeded the temporary address range set in step S81A (Yes in step S95), management device 80 sets the temporary address back to the initial value (step S96), and returns to step S82.

### [Communication address setting method for terminal device]

Fig. 10 is a flowchart illustrating a communication address setting method for terminal device 10 of the modification.

As illustrated in Fig. 10, after accepting the temporary address setting signal transmitted from management device 80, terminal device 10 sets the temporary address and the temporary address range (step S10A). Terminal device 10 sets, for example, the temporary address range to 200 to 254 and sets the initial value of the temporary address to 254 based on the instruction of management device 80.

Steps S11 to S16 are the same as those in the exemplary embodiment. Thus, a part of the description will be omitted. Terminal device 10 accepts setting start signal s1 transmitted from management device 80 (step S11). Terminal device 10 randomly sets each of acceptable number of times CNT and response time tr (step S12). For example, terminal device 10 randomly generates one integer from a range of 1 to 199, inclusive, using a random number generator. Terminal device 10 sets the generated integer as acceptable number of times CNT.

Terminal device 10 determines whether reply request signal s2 has been accepted (step S13). When reply request signal s2 has not been accepted (No in step S13), terminal device 10 returns to step S13. When reply request signal s2 has been accepted (Yes in step S13), terminal device 10 counts down acceptable number of times CNT (step S14). Terminal device 10 determines whether acceptable number of times CNT is 0 (step S15). When acceptable number of times CNT is not 0 (No in step S15), the processing returns to step S13. When acceptable number of times CNT is 0 (Yes in step S15), terminal device 10 transmits reply signal s2a to management device 80 (step S16).

In step S17, terminal device 10 determines whether address setting signal s4 has been accepted (step S17).

When address setting signal s4 has not been accepted (No in step S17), the value of the temporary address set in step S10A is decreased by one (step S21). For example, when the original temporary address is 254, terminal device 10 sets the temporary address after the change to 253.

Terminal device 10 determines whether the temporary address has exceeded the temporary address range set in step S10A (step S22). In this example, the temporary address range is set to 200 to 254, and when the temporary address is less than 200, it is determined that the temporary address has exceeded to the minus side.

When the temporary address has not exceeded the range set in step S10A (No in step S22), the processing returns to step S12, and terminal device 10 randomly sets each of acceptable number of times CNT and response time tr. When the temporary address has exceeded the temporary address range set in step S10A (Yes in step S22), terminal device 10 sets the temporary address back to the initial value (step S23), and then executes the processing of step S12.

When accepting the address setting signal s4 (Yes in step S17), terminal device 10 sets the communication address included in address setting signal s4 as its own communication address (step S18). After setting the communication address, terminal device 10 outputs setting completion signal s4a indicating that the setting of the communication address has been completed to management device 80 (step S19). By executing these steps, the communication address is set for terminal device 10.

### (Conclusions)

As described above, terminal device 10 according to an exemplary embodiment is a terminal device communicatively connected to management device 80, terminal device 10 including number-of-times setting unit 20 that sets acceptable number of times CNT with respect to reply request signal s2 transmitted from management device 80, counter 30 that counts down acceptable number of times CNT each time reply request signal s2 is accepted, and address setting unit 40 that sets a communication address transmitted from management device 80 as a communication address of terminal device 10 when acceptable number of times CNT is 0.

Terminal device 10 is configured to count down acceptable number of times CNT and set the communication address when acceptable number of times CNT is 0. Thus, there is no need for management device 80 to issue a command while sequentially changing the address, check a response from the terminal device, and check the temporary address of the terminal device, for example. With this configuration, the communication address of terminal device 10 can be easily set.

Number-of-times setting unit 20 may randomly set acceptable number of times CNT by accepting setting start signal s1 transmitted from management device 80.

Terminal device 10 randomly sets acceptable number of times CNT in this manner, and thus, acceptable numbers of times CNT different from each other for the plurality of terminal devices 10 can be easily set, for example. With this configuration, acceptable number of times CNT can be counted down for each of the plurality of terminal devices 10, and the communication address can be set when acceptable number of times CNT becomes 0 in the plurality of terminal devices 10. With this configuration, the communication address of terminal device 10 can be easily set.

Terminal device 10 further includes reply unit 35 that outputs reply signal s2a with respect to reply request signal s2. Reply unit 35 outputs reply signal s2a to management device 80 when acceptable number of times CNT becomes 0. Address setting unit 40 may acquire the communication address transmitted from management device 80 based on reply signal s2a and set the communication address.

By outputting reply signal s2a to management device 80 in this manner, the communication address transmitted from management device 80 can be reliably acquired based on reply signal s2a. With this configuration, the communication address can be easily and reliably set.

Terminal device 10 may further include response time setting unit 25 that sets response time tr from acceptance of reply request signal s2 to output of reply signal s2a.

By setting response time tr with terminal device 10 in this manner, it is possible to easily check the presence or absence of an error of reply signal s2a output from the plurality of terminal devices 10 with management device 80, for example. With this configuration, the communication address can be prevented from being erroneously set for terminal device 10 when there is an error in reply signal s2a.

Response time setting unit 25 may randomly set response time tr by accepting setting start signal s1 transmitted from management device 80.

Terminal device 10 randomly sets response time tr in this manner, and thus, response times tr different from each other for the plurality of terminal devices 10 can be easily set, for example. With this configuration, for example, the presence or absence of an error in reply signal s2a output from the plurality of terminal devices 10 is easily checked by management device 80, and the communication address can be prevented from being erroneously set for terminal device 10 when reply signal s2a has an error.

Number-of-times setting unit 20 may set again acceptable number of times CNT by accepting reply request signal s2 when acceptable number of times CNT is 0, and response time setting unit 25 may set again response time tr by accepting reply request signal s2 when acceptable number of times CNT is 0.

With this configuration, even when the same acceptable number of times CNT is set in the plurality of terminal devices 10, it is possible to easily set again acceptable number of times CNT and response time tr and easily set the communication address for terminal device 10.

Communication system 1 according to the exemplary embodiment includes management device 80 and a plurality of terminal devices 10 described above. The plurality of terminal devices 10 are bus-connected to management device 80.

With this configuration, communication system 1 capable of easily setting the communication addresses for the plurality of terminal devices 10 can be provided.

Each of the plurality of terminal devices 10 includes bus communication terminals P1a, P1b, P2a, and P2b bus-connected to management device 80 and acquires the communication address transmitted from management device 80 via bus communication terminals P1a, P1b, P2a, and P2b. Management device 80 may control terminal device 10 by outputting a control signal including information on the communication address to bus communication terminals P1a, P1b, P2a, and P2b.

With this configuration, the communication address is acquired via bus communication terminals P1a, P1b, P2a, and P2b, terminal device 10 can be controlled via bus communication terminals P1a, P1b, P2a, and P2b, and it is not necessary to provide a dedicated terminal for setting the communication address. As a result, the communication address for terminal device 10 can be set with a simple configuration.

The plurality of terminal devices includes at least first terminal device 11 and second terminal device 12, and each of first terminal device 11 and second terminal device 12 includes bus communication terminals P1a and P1b on one side and bus communication terminals P2a and P2b on an other side. Management device 80 may be connected to bus communication terminals P1a and P1b on the one side of first terminal device 11, and bus communication terminals P2a and P2b on the other side of first terminal device 11 may be connected to bus communication terminals P1a and P1b on the one side of second terminal device 12.

With this configuration, communication system 1 capable of easily setting the communication addresses for first terminal device 11 and second terminal device 12 can be provided.

When a signal received through replies of first terminal device 11 and second terminal device 12 is different from predetermined reply signal s2a, management device 80 discards the signal that has been received and transmits reply request signal s2 to first terminal device 11 and second terminal device 12. Each of first terminal device 11 and second terminal device 12 may set again acceptable number of times CNT and response time tr by accepting reply request signal s2 with acceptable number of times CNT being 0.

With this configuration, even when the same acceptable number of times CNT is set in first terminal device 11 and second terminal device 12, acceptable number of times CNT and response time tr can be easily set again, and the communication addresses of first terminal device 11 and second terminal device 12 can be easily set.

Management device 80 outputs an all-retry signal for setting again the communication address when the number of times of outputting reply request signal s2 has exceeded a predetermined number. Each of the plurality of terminal devices 10 may set again acceptable number of times CNT and response time tr based on the all-retry signal and delete the communication address when the communication address is already set for the terminal device.

With this configuration, even when same acceptable number of times CNT and same response time tr are set in the plurality of terminal devices 10, the communication address can be easily set again. As a result, communication addresses for a plurality of terminal devices 10 can be easily set.

A terminal device according to the exemplary embodiment is terminal device 10 communicatively connected to management device 80, the terminal device including number-of-times setting unit 20 that randomly sets a predetermined number of times, counter 30 that counts a number of times of acceptance of reply request signal s2 transmitted from management device 80, and address setting unit 40 that sets a communication address transmitted from management device 80 as a communication address of terminal device 10 when the number of times of acceptance matches the predetermined number of times.

Terminal device 10 counts the number of times of acceptance, and sets the communication address when the number of times of acceptance matches the predetermined number of times, and thus, for example, it is not necessary for management device 80 to issue an operation request command to the terminal device while sequentially changing the address. With this configuration, the communication address of terminal device 10 can be easily set.

A communication address setting method for terminal device 10 according to the exemplary embodiment includes randomly setting a predetermined number of times, counting a number of times of acceptance of reply request signal s2 transmitted from an external device, and setting a communication address transmitted from the external device as a communication address of terminal device 10 when the number of times of acceptance matches the predetermined number of times.

By counting the number of times of acceptance and setting the communication address when the number of times of acceptance matches the predetermined number of times in this manner, it is not necessary for the external device to issue an operation request command to terminal device 10 while sequentially changing the address, for example. With this configuration, the communication address of terminal device 10 can be easily set.

### (Other exemplary embodiments)

The exemplary embodiment and modification have been described above. The present disclosure is not limited to the above-described exemplary embodiment and modification.

For example, terminal device 10 according to the exemplary embodiment may be a communication device itself. Communication system 1 in this case may be configured such that management device 80 controls the body of a drive device or the body of an electric device via terminal device 10. Terminal device 10 may be an address setting device having only a function of setting a communication address.

An example in which management device 80 is a constituent element different from terminal device 10 has been described above. However, the terminal device is not limited to this example. For example, the communication address may be set between terminal device 11 and terminal devices 12 to 15 with terminal device 11 having the same function as management device 80 as a master and terminal devices 12 to 15 as slaves.

In the above-described exemplary embodiment, an example in which the communication address is set to each terminal device 10 has been described. However, the association between the communication address and the arrangement position of each terminal device 10 may be separately performed after the communication address is set. For example, by outputting a control signal including a predetermined communication address from management device 80 and turning on a pilot lamp or the like provided in predetermined terminal device 10, the communication address and the arrangement position of each terminal device 10 can be associated.

In the above-described exemplary embodiment, the constituent elements of a control device or the like may be implemented by dedicated hardware or by execution of software programs individually suitable for the constituent elements. Each constituent element may be implemented by a program execution unit such as a central processing unit (CPU) or a processor reading and executing a software program recorded in a recording medium such as a hard disk or a semiconductor memory.

Each constituent element may be a circuit (or an integrated circuit). These circuits may constitute one circuit as a whole or may be separate circuits. Each of these circuits may be a general-purpose circuit or a dedicated circuit.

A comprehensive or specific aspect of the present disclosure may be implemented by a system, a device, a method, an integrated circuit, a computer program, or a non-transitory recording medium such as a computer-readable compact disc read only memory (CD-ROM). The aspect may be implemented by any combination of a system, a device, a method, an integrated circuit, a computer program, and a non-transitory recording medium. For example, the aspect may be realized as a program for causing a computer to execute control performed by a control device or the like included in each constituent element of a communication system.

The order of the plurality of pieces of processing in the operation of the communication system described in the above-described exemplary embodiment is an example. The order of the plurality of pieces of processing may be changed, or the plurality of pieces of processing may be executed in parallel.

The present disclosure also includes a mode obtained by applying various modifications conceived by those skilled in the art to each exemplary embodiment, or a mode realized by freely combining constituent elements and functions in the exemplary embodiments without departing from the gist of the present disclosure.

### INDUSTRIAL APPLICABILITY

The terminal device, the communication system, and the communication address setting method for the terminal device of the present disclosure are useful for various communication systems because the communication address can be easily set.

### REFERENCE MARKS IN THE DRAWINGS

1: communication system
10, 11, 12, 13, 14, 15: terminal device
20: number-of-times setting unit
25: response time setting unit
30: counter
35: reply unit
40: address setting unit
50: information processor
56: storage
60: transceiver IC
61, 62, 63: photocoupler
80: management device
a1, a2, b1, b2: internal wire
C1, C2: connector
CNT: acceptable number of times
G: ground terminal
L1, L2, L3, L4, L5: feed wire
P1a, P1b, P2a, P2b: bus communication terminal
s 1: setting start signal
s2: reply request signal
s2a: reply signal
s3: temporary stop signal
s4: address setting signal
s4a: setting completion signal
s5: resume signal
tr: response time

## Claims

1. A terminal device communicatively connected to a management device, the terminal device comprising:
a number-of-times setting unit that sets an acceptable number of times with respect to a reply request signal transmitted from the management device;
a counter that counts down the acceptable number of times each time the reply request signal is accepted; and
an address setting unit that sets a communication address transmitted from the management device as a communication address of the terminal device when the acceptable number of times is 0.

2. The terminal device according to Claim 1, wherein
the number-of-times setting unit randomly sets the acceptable number of times by accepting a setting start signal transmitted from the management device.

3. The terminal device according to Claim 1,
the terminal device further comprising a reply unit that outputs a reply signal with respect to the reply request signal,
wherein
the reply unit outputs the reply signal to the management device when the acceptable number of times becomes 0, and
the address setting unit acquires the communication address transmitted from the management device based on the reply signal and sets the communication address.

4. The terminal device according to Claim 3,
the terminal device further comprising a response time setting unit that sets a response time from acceptance of the reply request signal to output of the reply signal.

5. The terminal device according to Claim 4, wherein
the response time setting unit randomly sets the response time by accepting a setting start signal transmitted from the management device.

6. The terminal device according to Claim 4, wherein
the number-of-times setting unit sets again the acceptable number of times by accepting the reply request signal when the acceptable number of times is 0, and
the response time setting unit sets again the response time by accepting the reply request signal when the acceptable number of times is 0.

7. A communication system comprising:
the management device; and
a plurality of the terminal devices, each of the plurality of terminal devices being the terminal device according to Claim 4 or 5,
wherein the plurality of terminal devices is bus-connected to the management device.

8. The communication system according to Claim 7, wherein
each of the plurality of terminal devices includes a bus communication terminal bus-connected to the management device and acquires the communication address transmitted from the management device via the bus communication terminal, and
the management device controls each of the plurality of terminal devices by outputting a control signal including information on the communication address to the bus communication terminal.

9. The communication system according to Claim 7, wherein
the plurality of terminal devices include at least a first terminal device and a second terminal device,
each of the first terminal device and the second terminal device includes a bus communication terminal on one side and a bus communication terminal on an other side,
the management device is connected to the bus communication terminal on the one side of the first terminal device, and
the bus communication terminal on the other side of the first terminal device is connected to the bus communication terminal on the one side of the second terminal device.

10. The communication system according to Claim 9, wherein
when a signal received through replies of the first terminal device and the second terminal device is different from a predetermined reply signal, the management device discards the signal that has been received and transmits the reply request signal to the first terminal device and the second terminal device, and
each of the first terminal device and the second terminal device sets again the acceptable number of times and the response time by accepting the reply request signal with the acceptable number of times being 0.

11. The communication system according to Claim 7, wherein
the management device outputs an all-retry signal for setting again the communication address when a number of times of outputting the reply request signal has exceeded a predetermined number, and
each of the plurality of terminal devices sets again the acceptable number of times and the response time based on the all-retry signal, and deletes the communication address when the communication address is already set for the terminal device.

12. A terminal device communicatively connected to a management device, the terminal device comprising:
a number-of-times setting unit that randomly sets a predetermined number of times;
a counter that counts a number of times of acceptance of a reply request signal transmitted from the management device; and
an address setting unit that sets a communication address transmitted from the management device as a communication address of the terminal device when the number of times of acceptance matches the predetermined number of times.

13. A communication address setting method for a terminal device, the method comprising:
randomly setting a predetermined number of times;
counting a number of times of acceptance of a reply request signal transmitted from an external device; and
setting a communication address transmitted from the external device as a communication address of the terminal device when the number of times of acceptance matches the predetermined number of times.
